**Europäisches Patentamt**

**European Patent Office**

**Office européen des brevets**

(19)

(11) Numéro de publication : **0 258 157 B1**

(12) **FASCICULE DE BREVET EUROPEEN**

(45) Date de publication du fascicule du brevet :
05.02.92 Bulletin 92/06

(51) Int. Cl.⁵ : **E04H 17/12, A01G 17/14**

(21) Numéro de dépôt : **87420213.8**

(22) Date de dépôt : **05.08.87**

(54) **Piquet destiné à supporter des fils horizontaux notamment pour la vigne ou les clôtures.**

(30) Priorité : **08.08.86 FR 8611659**

(43) Date de publication de la demande :
**02.03.88 Bulletin 88/09**

(45) Mention de la délivrance du brevet :
**05.02.92 Bulletin 92/06**

(84) Etats contractants désignés :
**CH DE ES IT LI**

(56) Documents cités :
**DE-A- 3 109 889**
**DE-C- 2 560 090**
**FR-A- 2 565 775**

(73) Titulaire : **SOCIETE DUNOIS COUSANCE**
**F-39190 BEAUFORT (FR)**

(72) Inventeur : **Ferrier, Jean**
**Villa Les Charmailles Cousance**
**F-39190 Beaufort (FR)**

(74) Mandataire : **Cabinet Pierre HERRBURGER**
**115, Boulevard Haussmann**
**F-75008 Paris (FR)**

## Description

La présente invention est relative à un piquet d'un type nouveau, destiné à des applications multiples, notamment pour l'agriculture. Un tel piquet peut être utilisé, entre autres, pour effectuer les opérations de palissage dans la culture de la vigne, ou pour réaliser des clôtures.

On sait que les opérations de palissage, dans la culture de la vigne, consistent à attacher les sarments sur des fils de fer tendus horizontalement le long des rangées de vigne. Ces fils de fer sont tendus les uns au-dessus des autres, et portés par un alignement de piquets verticaux. A chaque extrémité de la rangée, un piquet terminal est implanté d'une manière renforcée, pour supporter la tension des fils de fer.

On connaît différents types de piquets, en bois ou en métal, le long desquels les fils de fer sont habituellement attachés ou agrafés par des procédés relativement coûteux en main d'oeuvre. On connaît par ailleurs, par exemple par le brevet français 2 565 775, un piquet constitué par une tôle pliée suivant un profil tubulaire, et le long duquel des encoches sont prévues par paires, toutes découpées suivant un même profil.

On connaît d'autre part, du document DE-A- 3 109 889, un piquet en matière plastique extrudée le long duquel sort ménagées deux nervures continues dans lesquelles sont découpées à intervalles réguliers des encoches pour la mise en place de fils. Toutefois ces encoches, du fait de leur forme et de leur disposition, si elles permettent la mise en place facile d'un fil de fer, ne peuvent empêcher ce dernier de se décrocher de façon intempestive.

Les piquets connus présentent d'autres inconvénients, notamment de s'adapter mal à des utilisations très variées. De plus, même pour une seule application telle que la vigne, les types de plantation et les profils des terrains sont tellement divers que l'utilisation en est parfois limitée.

La présente invention a pour but d'éviter ces inconvénients en proposant un piquet susceptible de se prêter aux utilisations les plus diverses, quelle que soit la pente du terrain.

La présente invention a ainsi pour objet un piquet tel que décrit dans la revendication 1.

Suivant une autre caractéristique de l'invention, les encoches successives d'une des rangées verticales sont séparées par un intervalle deux fois plus court que celui des encoches de l'autre rangée.

Le dessin annexé, donné à titre d'exemple non limitatif, permettra de mieux comprendre les caractéristiques de l'invention.

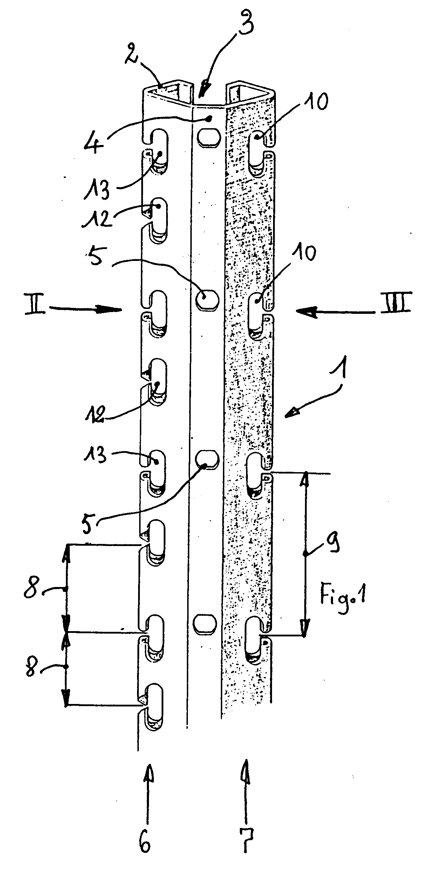

Figure 1 est une vue d'en semble d'un tronçon d'un piquet selon l'invention.

Figure 2 en est une vue de gauche (flèche II, figure 1) montrant l'une des rangées d'enciches.

Figure 3 en est une vue de droite ( flèche III, figure 1) montrant l'autre rangée d'encoches .

Le piquet 1 représenté sur les dessins est constituée par une tôle pliée suivant une section transversale 2 sensiblement en losange . Il définit une ouverture latérale longitudinale 3 à l'opposé de laquelle se trouve un fond longitudinal plat 4 . Le long de celui-ci sont réparties des perforations d'ancrage 5 .

De part et d'autre de l'ouverture 3 sont découpées deux rangées longitudinales 6 et 7 d'encoches d'accrochage . Les encoches de la rangée 6 sont régulièrement espacées les unes des autres , suivant un pas 8 ..Les encoches de la rangée 7 sont régulièrement espacées les unes des autres , suivant un pas 9 . Le pas 8 de la rangée 6 est sensiblement égal à la moitié du pas 9 de la rangée 7 .

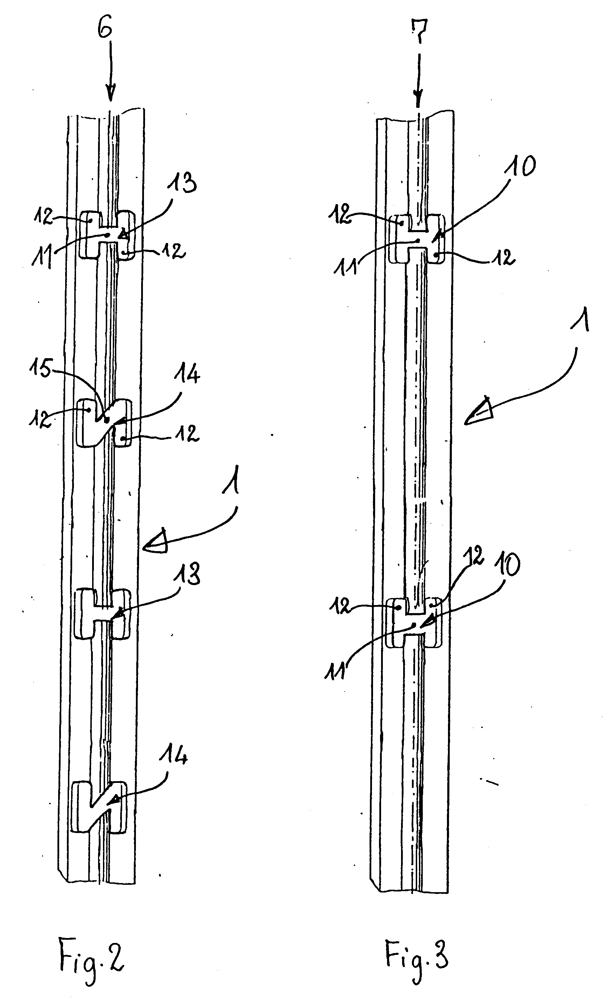

Chaque encoche 10 de la rangée 7 est découpée suivant un profil en H , qui définit une traverse horizontale 11, perpendiculaire aux deux branches verticales 12 entre lesquelles elle se trouve ( figure 3).

Par contre , une sur deux des encoches de la rangée 6 , référencée 13 , est découpée suivant le même profil en H , avec une traverse horizontale 11 perpendiculaire aux deux branches verticales 12 .

Une sur deux des encoches de la rangée 6 référencée 14 , est , au contraire , découpée suivant un profil en N , c'est-à-dire que sa traverse 15 est disposée en oblique , pour relier le haut d'une des branches-verticales 12 au bas de l'autre .

Ainsi , l'utilisateur peut , à volonté:
– soit placer deux fils de fer au même niveau , en les accrochant l'un dans une encoche 13 de la rangée 6 , l'autre dans l'encoche 10 située à même hauteur dans la rangée 7 ;
– soit placer des fils de fer alternativement à des hauteurs différentes de part et d'autre du piquet 1 , en les accrochant alternativement dans une encoche 10 ( rangée 7) et dans une encoche 14 ( rangée (6) ;
– soit mettre en place des fils de fer faciles à relever , par utilisation des encoches 10 et 13 à barrette 11 horizontale ;
– soit au contraire , mettre en place des fils de fer ne risquant en aucun cas de se décrocher , moyennant leur accrochage dans une encoche 14 à barrette oblique 15 .

## Revendications

1. Piquet (1) constitué par une bande de tôle repliée sur elle-même , pour définir une pièce de forme tubulaire avec , entre ses deux bords repliés l'un vers l'autre, une ouverture latérale (3) s'étendant sur toute sa longueur, de part et d'autre de laquelle sont découpées dans la tôle deux rangées longitudinales (6) et (7) d'encoches , caractérisé en ce que :
– les encoches d'une première rangée (6) sont découpées suivant au moins deux profils différentes , à savoir :

    * un profil en H , dont la traverse (11) est perpendiculaire aux deux branches verticales (12)

    * un profil en N , dont la traverse (12) est oblique entre les deux branches (12) qu'elle relie

– les encoches de l'autre rangée (7) sont toutes découpées suivant le même profil ;

– alors que les encoches de la première rangée (6) sont séparées par un intervalle correspondant à un pas (8) différent du pas (9) des encoches (10) sur la rangée (7) .

2. Piquet suivant la revendication 1 , caractérisé en ce que , le long de la rangée (7) sont réparties uniquement des encoches en H (10) .

3. Piquet suivant l'une quelconque des revendications précédentes , caractérisé en ce que le pas (8) est deux fois plus court que le pas (9) .

4. Piquet suivant la revendication 2 , caractérisé en ce que chaque encoche en H (13) de la rangée (6) fait face à une encoche en H (10) de la rangée (7).


**Patentansprüche**

1. Pfosten (1) aus einem Blechband, das zur Bildung eines rohrförmigen Teils in sich gebogen ist und zwischen seinen beiden gegeneinander gebogenen Rändern eine sich über seine gesamte Länge erstreckende seitliche Öffnung (3) aufweist, zu deren beiden Seiten in das Blech zwei Längsreihen (6) und (7) von Ausnehmungen eingeschnitten sind, dadurch gekennzeichnet,

– daß die Ausnehmungen einer ersten Reihe (6) in mindestens zwei verschiedenen Profilen ausgeschnitten sind, d.h.:

    * ein H-Profil, dessen Quersteg (11) senkrecht zu zwei vertikalen Schenkeln (12) steht,

    * ein N-Profil, dessen Quersteg (15) schräg zwischen den beiden Schenkeln (12) steht, die er verbindet;

– die Ausnehmungen der anderen Reihe (7) sind sämtlich im gleichen Profil geschnitten;

– die Ausnehmungen der ersten Reihe (6) sind durch ein Intervall entsprechend einem Abstandsschritt (8) getrennt, welches von dem Abstandsschritt (9) der Ausnehmungen (10) der Reihe (7) verschieden ist.

2. Pfosten nach Anspruch 1, dadurch gekennzeichnet, daß entlang der Reihe (7) nur H-förmige Ausnehmungen (10) verteilt sind.

3. Pfosten nach einem der vorangehenden Ansprüche, dadurch gekennzeichnet, daß der Abstandsschritt (8) die Hälfte des Abstandsschritts (9) beträgt.

4. Pfosten nach Anspruch 2, dadurch gekennzeichnet, daß jede H-förmige Ausnehmung (13) der Reihe (6) einer H-förmigen Ausnehmung (10) der Reihe (7) gegenüberliegt.


**Claims**

1. Post (1) consisting of a sheet metal strip folded onto itself, so as to define a tubular part with, between its two edges which are folded towards one another, a lateral aperture (3) extending over its entire length, on both sides of which two longitudinal rows (6) and (7) of notches are cut out in the sheet metal, characterised in that:

– the notches of the first row (6) are cut out according to at least two different profiles, ie:

    * an H-shaped profile, of which the cross piece (11) is perpendicular to the two vertical branches (12);

    * an N-shaped profile, of which the cross piece (15) is oblique between the two branches (12) which it connects;

– the notches of the second row (7) are all cut out according to the same profile;

– whilst the notches in the first row (6) are separated by a spacing corresponding to a step (8) which is different from the step (9) between the notches (10) in the row (7).

2. Post according to Claim 1, characterised in that only the H-shaped notches (10) are distributed along the row (7).

3. Post according to either of the preceding claims, characterised in that the step (8) is half the length of the step (9).

4. Post according to Claim 2, characterised in that each H-shaped notch (13) in the row (6) is opposite an H-shaped notch (10) in the row (7).

Fig. 1

Fig. 2

Fig. 3